(19) Europäisches Patentamt
European Patent Office
Office européen des brevets

(11) **EP 3 106 321 B1**

(12) **EUROPEAN PATENT SPECIFICATION**

(45) Date of publication and mention
of the grant of the patent:
**31.07.2019 Bulletin 2019/31**

(51) Int Cl.:
*B60C 9/02* *(2006.01)*    *B60C 9/04* *(2006.01)*

(21) Application number: **16169293.4**

(22) Date of filing: **12.05.2016**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2015 JP 2015121191**

(43) Date of publication of application:
**21.12.2016 Bulletin 2016/51**

(73) Proprietor: **SUMITOMO RUBBER INDUSTRIES LIMITED**
**Kobe-shi,**
**Hyogo-ken (JP)**

(72) Inventors:
• **YAGUCHI, Masashi**
**Kobe-shi, Hyogo 651-0072 (JP)**
• **KOHARA, Kei**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 810 792     JP-A- H10 193 473**
**JP-A- 2008 308 104     JP-A- 2010 208 090**
**JP-A- 2012 106 441**

**Description**

BACKGROUND OF THE INVENTION

Field of the Invention

The present invention relates to a pneumatic tire capable of reducing generation of poor appearance. The features of the preamble of the independent claim are known from JP 2012 106441 A. Related technology is known from JP 2010 208090 A.

Description of the Background Art

For example, Japanese Laid-Open Patent Publication No. 2014-069335 discloses a method for manufacturing a pneumatic tire by use of a rigid core. The rigid core has an outer surface shape that substantially coincides with a shape of a cavity surface of a tire to be manufactured. Strip-shaped sheet-like ply pieces are sequentially adhered to the outer surface of the rigid core in the tire circumferential direction in order to produce a green tire. Thus, a toroidal carcass ply is formed on the outer side of the rigid core. Thereafter, the other tire members are disposed to form a green tire on the outer side of the rigid core. The green tire and the rigid core are vulcanized, whereby a pneumatic tire is manufactured.

The pneumatic tire manufactured by the above-described manufacturing method has carcass cords arranged at uniform intervals and has excellent uniformity, as compared to a conventional tire produced by a manner in which, for example, a green tire obtained by a cylindrical carcass ply being toroidally shaped by dilation deformation is vulcanized.

Each ply piece has a radial length greater than a length in the tire circumferential direction. Each ply piece has a plurality of carcass cords arranged along the longitudinal direction. The carcass cords are arranged so as to be almost equally spaced in the tire circumferential direction.

SUMMARY OF THE INVENTION

In general, on the outer surface of the rigid core, the length, in the tire circumferential direction, on the tread portion side, is greater than the length, in the tire circumferential direction, on the bead portion sides. In order to absorb such a difference in circumferential length, for example, the ply pieces adjacent to each other in the tire circumferential direction are disposed so as to overlap each other from sidewall portions to the bead portions. In the overlap portions of the ply pieces, the cord density of the carcass cords is relatively increased, and the rigidity of the carcass ply is partially enhanced.

A problem arises that, in such a portion having the enhanced rigidity, dilation of the tire is difficult when the tire is inflated to an internal pressure, and the outer surface of the tire is partially dented to generate a dent.

The present invention is made in view of the aforementioned circumstance, and a main object of the present invention is to provide a pneumatic tire that has a basic structure in which an intermediate elongation rate Ee of carcass cords arranged in at least one of side edge portions, in the circumferential direction, of the ply piece is made greater than an intermediate elongation rate Ec of carcass cords arranged in the center portion of the ply piece, to allow reduction of generation of a dent and the like in the outer surface of the tire.

The present invention is directed to a pneumatic tire, as defined in the independent claim, that includes a carcass having at least one carcass ply that extends from a tread portion through sidewall portions to bead portions. The carcass ply has strip-shaped sheet-like ply pieces arranged in a tire circumferential direction, and each strip-shaped sheet-like ply piece has a radial length greater than a circumferential length in the tire circumferential direction. Each ply piece has a plurality of carcass cords arranged along a longitudinal direction. The ply piece at least partially overlaps a ply piece that is adjacent thereto in the tire circumferential direction. An intermediate elongation rate Ee of the carcass cords arranged in at least one of side edge portions, in a circumferential direction, of the ply piece is greater than an intermediate elongation rate Ec of the carcass cords arranged in a center portion of the ply piece.

In the pneumatic tire according to the present invention, the intermediate elongation rate Ee of the carcass cords arranged in both the side edge portions, in the circumferential direction, of the ply piece is preferably greater than the intermediate elongation rate Ec of the carcass cords arranged in the center portion.

In the pneumatic tire according to the present invention, a ratio Ec/Ee in intermediate elongation rate of the carcass cords is preferably 0.20 to 0.35.

In the pneumatic tire according to the present invention, the intermediate elongation rate Ee of the carcass cords arranged in the side edge portions is preferably increased continuously or stepwise from the center portion toward side edges in the ply piece.

In the pneumatic tire according to the present invention, a cord material of the carcass cords arranged in the side edge portions and a cord material of the carcass cords arranged in the center portion are preferably different from each other.

A pneumatic tire of the present invention includes a carcass having at least one carcass ply that extends from a tread portion through sidewall portions to bead portions. The carcass ply has strip-shaped sheet-like ply pieces arranged in a tire circumferential direction, and each strip-shaped sheet-like ply piece has a radial length greater than a circumferential length in the tire circumferential direction. Each ply piece has a plurality of carcass cords arranged along the longitudinal direction. The ply piece at least partially overlaps a ply piece that is adjacent thereto in the tire circumferential direction.

An intermediate elongation rate Ee of the carcass cords arranged in at least one of side edge portions, in a circumferential direction, of the ply piece is greater than an intermediate elongation rate Ec of the carcass cords arranged in a center portion of the ply piece. Thus, the carcass cords which are relatively easily elongated are arranged in an overlap portion, of the ply piece, in which the cord density is partially increased. Accordingly, rigidity can be prevented from being partially enhanced in the overlap portion of the ply piece, whereby generation of poor appearance such as dent (recess) can be reduced.

BRIEF DESCRIPTION OF THE DRAWINGS

FIG. 1 is a partial perspective view of an example of a pneumatic tire according to one embodiment;
FIG. 2 is a perspective view of a rigid core for forming a carcass ply;
FIG. 3 is a perspective view of a ply piece according to the embodiment;
FIG. 4 is a cross-sectional view of the ply piece shown in FIG. 3;
FIG. 5 is a cross-sectional view of a ply piece in which an intermediate elongation rate of a side edge carcass cord is continuously increased;
FIG. 6 is a cross-sectional view of a ply piece in which an intermediate elongation rate of a side edge carcass cord is increased stepwise;
FIG. 7 is a cross-sectional view of a ply piece in which a spacing for the side edge carcass cord is greater than a spacing for a central carcass cord;
FIG. 8 is a cross-sectional view of a ply piece in which a spacing for the side edge carcass cord is continuously increased;
FIG. 9 is a cross-sectional view of a ply piece in which the number of twists of the side edge carcass cord is greater than the number of twists of the central carcass cord;
FIG. 10 is a graph showing a relationship between elongation and load of carcass cords; and
FIG. 11 is a cross-sectional view of a ply piece in which the thickness of the side edge carcass cord is less than the thickness of the central carcass cord.

DESCRIPTION OF THE PREFERRED EMBODIMENTS

Hereinafter, an embodiment of the present invention will be described with reference to the drawings.

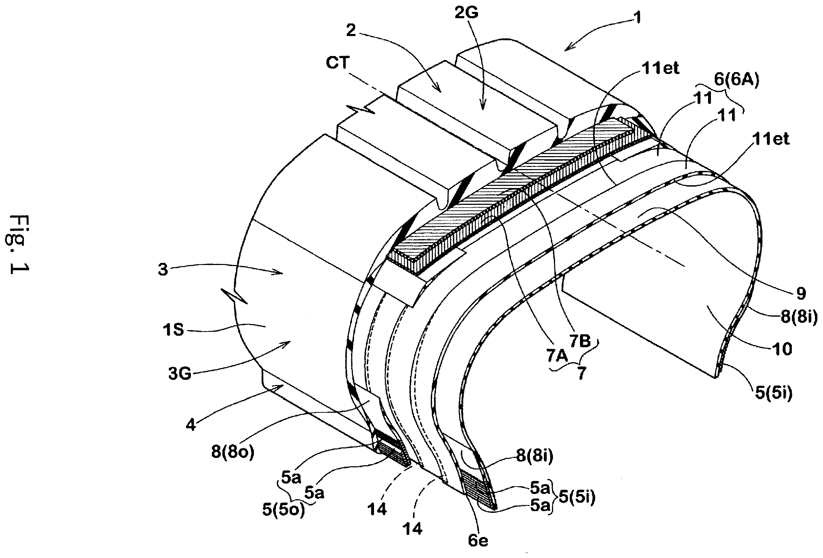

FIG. 1 is a partial perspective view of an example of a pneumatic tire (hereinafter, may be simply referred to as a "tire") 1 of the present embodiment. The tire 1 of the present embodiment is a tire for passenger cars. The tire 1 includes: a carcass 6 that extends from a tread portion 2 through sidewall portions 3 to bead cores 5 of bead portions 4; and a belt layer 7 disposed outward of the carcass 6 and inward of the tread portion 2 in the tire radial direction. Further, an inner liner rubber 9 forming a cavity surface 10 of the tire 1 is disposed inward of the carcass 6.

The carcass 6 includes at least one carcass ply 6A. In the present embodiment, the carcass 6 includes one carcass ply 6A. The carcass ply 6A has carcass cords arranged at, for example, an angle of 75° to 90° relative to the tire equator CT. In the present embodiment, the carcass ply 6A extends between the bead portions 4, 4 from the tread portion 2 through a pair of the sidewall portions 3, 3 so as to form a toroidal shape. In the present embodiment, the carcass ply 6A is not turned up around each bead portion 4 at an inner end 6e in the tire radial direction, and is terminated at the inner end 6e. The carcass cords of the present embodiment are formed as organic fiber cords. The carcass cords may be steel cords.

Each bead core 5 is disposed on the inner end 6e side of the carcass ply 6A. In the present embodiment, each bead core 5 includes an inner core 5i and an outer core 5o. The inner core 5i is disposed, on the carcass ply 6A, on the inner side in the tire axial direction. The outer core 5o is disposed, on the carcass ply 6A, on the outer side in the tire axial direction. The inner core 5i and the outer core 5o are each formed by one bead wire 5a being spirally wound and overlapped in the tire circumferential direction.

An apex rubber 8 is disposed in each bead portion 4. The apex rubber 8 includes an inner apex rubber 8i that extends outward from the inner core 5i in the tire radial direction; and an outer apex rubber 8o that extends outward from the outer core 5o in the tire radial direction. The apex rubbers 8i, 8o are each formed of a hard rubber.

The belt layer 7 includes two belt plies 7A, 7B. The belt plies 7A, 7B have belt cords arranged at, for example, a small angle of 10° to 35° relative to the tire equator CT. The belt plies 7A, 7B overlap each other such that the belt cord of the belt ply 7A and the belt cord of the belt ply 7B intersect each other in the tire radial direction. For the belt cords, for example, steel cords or organic fiber cords made of an aramid or the like are used.

The inner liner rubber 9 is formed of air-impermeable butyl-based rubber. In the present embodiment, the inner liner rubber 9 extends between the paired bead portions 4, 4 so as to form a toroidal shape and is disposed almost over the entire region of the cavity surface 10.

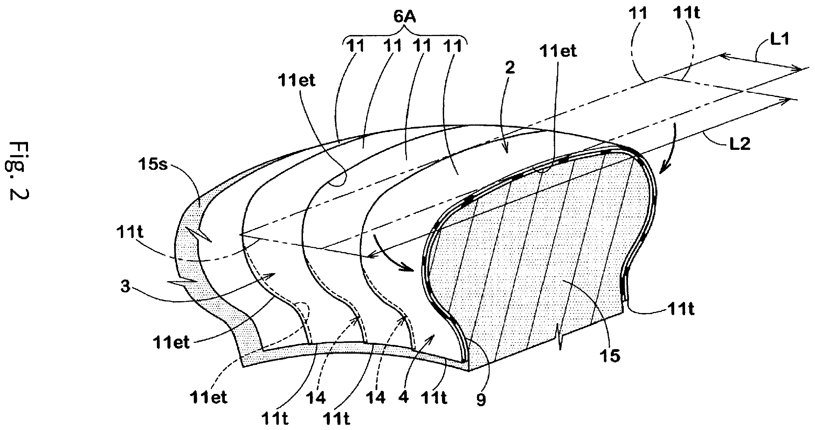

FIG. 2 is a perspective view of a rigid core for forming the carcass ply 6A. In the present embodiment, the tire 1 (carcass ply 6A) is manufactured by using a rigid core 15 having an outer surface 15s that substantially coincides in shape with the cavity surface 10 (shown in FIG. 1) of the tire 1.

In the present embodiment, the carcass ply 6A is formed by strip-shaped sheet-like ply pieces 11 being arranged in the tire circumferential direction. In the present embodiment, the ply pieces 11 are formed such that a radial length L2 is set to be greater than a circumferential length L1 in the tire circumferential direction. The circumferential length L1 in the tire circumferential direction and the radial length L2 may be determined as appropriate according to the size of the tire 1 or the like. In the present embodiment, the circumferential length L1 in the tire circumferential direction is set to be, for example, about 24 to 34 mm. Meanwhile, the radial length L2 is set to be, for example, about 300 to 500 mm.

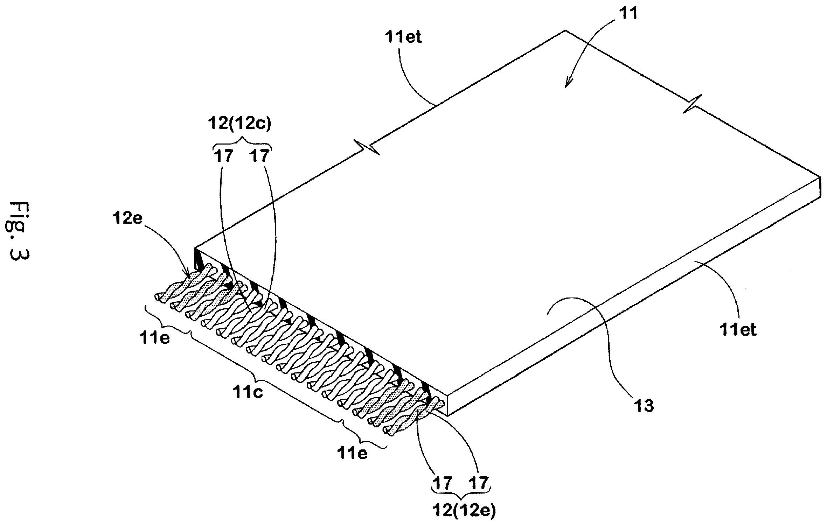

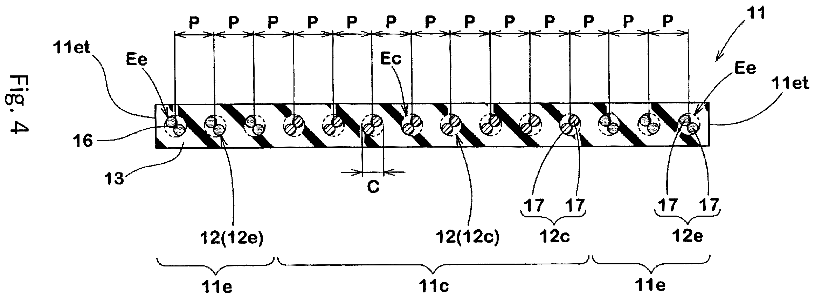

FIG. 3 is a perspective view of the ply piece 11 of the present embodiment. FIG. 4 is a cross-sectional view of the ply piece 11 shown in FIG. 3. Each ply piece 11 includes a plurality of carcass cords 12 arranged along the longitudinal direction, and an unvulcanized topping rubber 13 that covers the carcass cords 12. In the description herein, the "unvulcanized" state includes all the states in which completely vulcanized state has not been achieved. Therefore, a so-called semi-vulcanized state is included in the "unvulcanized" states.

In the present embodiment, each carcass cord 12 includes a plurality of strands 17, in the description herein, includes two strands 17, 17. Each of the strands 17, 17 is subjected to a first twist. These strands 17, 17 are twisted together (subjected to a second twist) into the carcass cord 12.

In each carcass cord 12, a direction for the first twist and a direction for the second twist of each of the strands 17, 17 are set to be the same direction. Further, in the present embodiment, the number of the first twists and the number of the second twists for the carcass cord 12 are set to be the same. The number of the first twists and the number of the second twists are determined as appropriate according to rigidity required for the carcass ply 6A.

In the present embodiment, all the carcass cords 12 included in the ply piece 11 have the same thickness C (shown in FIG. 4). The thickness C is determined as appropriate according to the performance required for the tire 1 (shown in FIG. 1). In the description herein, when the carcass cords 12 are organic fiber cords, the thickness of the carcass cord 12 is defined as the total fineness (dtex). The total fineness of the carcass cord 12 is set to be, for example, 2500 to 4000 dtex (3340 dtex in the present embodiment). When the carcass cords 12 are metal cords, the thickness C of the carcass cord 12 is defined as the diameter (mm) of a portion including a wire bundle.

In the present embodiment, the two strands 17, 17 are twisted together into the carcass cord 12. However, the present invention is not limited thereto. For example, three or more strands 17 (not shown) may be twisted together into the carcass cord 12.

In the present embodiment, the ply piece 11 has the carcass cords 12 equally spaced (a spacing P between the carcass cords 12 is the same for each carcass cord 12) in the tire circumferential direction. As shown in FIG. 4, the spacing P in the tire circumferential direction between the carcass cords 12 may be determined as appropriate according to the performance required for the tire 1 (shown in FIG. 1). In the present embodiment, the spacing P is set to be, for example, about 0.8 to 1.8 mm. The spacing P is defined as a distance between cord centers 16, 16 of the carcass cords 12 in a state where the ply pieces 11 have not been adhered to the rigid core 15 (shown in FIG. 2). Further, for the equal spacing, a tolerance of, for example, about 0.1 to 0.2 mm may be allowed.

As shown in FIG. 2, in the present embodiment, in a process step of forming an unvulcanized green tire (not shown), the strip-shaped sheet-like ply pieces 11 as described above are sequentially adhered to the outer surface 15s of the rigid core 15 in the tire circumferential direction. Thus, the carcass ply 6A having a toroidal shape is formed. In the present embodiment, the inner liner rubber 9 is previously disposed between the carcass ply 6A and the rigid core 15. Thereafter, the other tire members are disposed on the outer side of the carcass ply 6A. Thus, a green tire is formed on the outer side of the rigid core 15. The green tire (not shown) and the rigid core 15 are vulcanized, whereby the tire 1 shown in FIG. 1 is manufactured. Thus, in the process of manufacturing the tire 1 according to the present embodiment, in process steps from the formation of the green tire including the carcass ply 6A up to the vulcanization, the carcass ply 6A is not dilated and deformed.

On the outer surface 15s of the rigid core 15, the length, in the tire circumferential direction, on the tread portion 2 side is set to be greater than the length, in the tire circumferential direction, on the bead portion 4 sides. In order to absorb the difference in the circumferential length, each ply piece 11 is disposed so as to at least partially overlap the ply piece 11 that is adjacent thereto in the tire circumferential direction. In the present embodiment, in the ply pieces 11, 11 adjacent to each other in the tire circumferential direction, side edges 11et, 11et on the tread portion 2 side are disposed so as to contact with each other face-to-face while side edges 11et, 11et on radially end portion 11t, 11t sides are disposed so as to overlap each other.

An overlap portion 14 in which the ply pieces 11, 11 overlap each other allows a difference in circumferential length on the rigid core 15 to be absorbed. Therefore, the carcass ply 6A can be formed in a toroidal shape while generation of wrinkles or the like in the carcass ply 6A can be reduced. In the present embodiment, the overlap portion 14 is formed so as to have a substantially triangle shape in the side view.

In the overlap portion 14 of the carcass ply 6A, the carcass cords 12 (shown in FIG. 4) of the ply pieces 11, 11 adjacent to each other in the tire circumferential direction overlap one another. Thus, in the overlap portions 14, the cord density of the carcass cords 12 is relatively increased as compared to a portion in which the overlap portion 14 is not formed, and the rigidity of the carcass ply 6A is partially enhanced. In the portion (overlap portion 14) having such an enhanced rigidity, when the tire 1 (shown in FIG. 1) is inflated to an internal pressure, the dilation of the tire is difficult, so that an outer surface 1S of the tire 1 may be partially dented to generate a dent. The dent causes poor appearance of the tire 1. In particular, the dent tends to be obviously expressed and outstanding in the outer surfaces of the sidewall portions 3 (shown in FIG. 1) having a small rubber volume.

In the present embodiment, as shown in FIG. 4, an intermediate elongation rate Ee of the carcass cords 12 disposed in at least one of both side edge portions 11e, 11e, in the circumferential direction, of the ply piece 11, in the description herein, disposed in both the side edge portions 11e, 11e, is set to be greater than an intermediate elongation rate Ec of the carcass cords 12 disposed in a center portion 11c of the ply piece 11.

In the present embodiment, the side edge portion 11e is defined as a region which includes three carcass cords 12 (hereinafter, may be simply referred to as "side edge carcass cords 12e") arranged closest to the side edge 11et in the ply piece 11. The number of the side edge carcass cords 12e included in the side edge portion 11e is not limited to the number (three) described in the present embodiment. The number of the side edge carcass cords 12e included in the side edge portion 11e is preferably set as, for example, the maximum number of the carcass cords 12, of each ply piece 11, disposed in the overlap portion 14 (shown in FIG. 2) of the carcass ply 6A.

Further, the center portion 11c is defined as a region which includes the carcass cords 12 (hereinafter, may be simply referred to as "central carcass cords 12c") other than the side edge carcass cords 12e (in the present embodiment, three carcass cords). A boundary between the side edge portion 11e and the center portion 11c is defined as a mid-position between the side edge carcass cord 12e disposed closest to the center portion 11c, and the central carcass cord 12c disposed closest to the side edge portion 11e.

In the present embodiment, the intermediate elongation rate (%) of the carcass cord 12 represents an elongation under a load of 50 N in a "load-elongation" curve of the cord. The "load-elongation" curve is obtained at room temperature (25°C) in compliance with the standard of "Test method for chemical fiber tire cords" in "JISL1017". The intermediate elongation rate Ee of the side edge carcass cord 12e is obtained in such a manner that the tire 1 obtained by vulcanization is disassembled, five carcass cords 12 are extracted from the side edge portion 11e of the ply piece 11 at random, an intermediate elongation rate (%) of each carcass cord 12 is measured, and the average thereof is set as the intermediate elongation rate Ee. Meanwhile, the intermediate elongation rate Ec of the central carcass cord 12c is obtained in such a manner that five carcass cords 12 are extracted from the center portion 11c of the ply piece 11 at random, an intermediate elongation rate (%) of each carcass cord 12 is measured, and the average thereof is set as the intermediate elongation rate Ec.

In the present embodiment, a cord material of the side edge carcass cords 12e is made different from a cord material of the central carcass cords 12c, whereby the intermediate elongation rate Ee of the side edge carcass cords 12e is set to be greater than the intermediate elongation rate Ec of the central carcass cords 12c. That is, for the side edge carcass cords 12e, a cord material having a relatively greater intermediate elongation rate than an intermediate elongation rate of the central carcass cords 12c, is used. For example, when aramid cords are used for the central carcass cords 12c, rayon cords, PET (polyethylene terephthalate) cords, or the like which have an intermediate elongation rate greater than the aramid cords can be used for the side edge carcass cords 12e.

In the present embodiment, the intermediate elongation rate Ee is the same among the side edge carcass cords 12e. The intermediate elongation rate Ec is the same among the central carcass cords 12c.

In the above-described ply piece 11, the side edge carcass cords 12e that are relatively easily elongated (the intermediate elongation rate Ee is relatively great), are disposed in the side edge portions 11e, 11e that form the overlap portions 14 (shown in FIG. 2) of the carcass ply 6A. Thus, rigidity of the carcass ply 6A can be prevented from being partially enhanced in the overlap portions 14 in which the cord density is partially increased. Therefore, variation in rigidity of the carcass ply 6A between the overlap portions 14 and a portion other than the overlap portions 14 can be reduced. Therefore, when the tire 1 (shown in FIG. 1) is inflated to an internal pressure, the carcass ply 6A can be uniformly dilated. Thus, generation of dent in the outer surface 1S of the tire 1 shown in FIG. 1 can be prevented.

As shown in FIG. 4, in the center portion 11c in which the overlap portion 14 (shown in FIG. 2) of the carcass ply 6A is not formed, the central carcass cords 12c which are relatively difficult to elongate (the intermediate elongation rate Ec is relatively small) are disposed. Therefore, rigidity of the carcass ply 6A is maintained, whereby various performances, of the tire 1, including steering stability performance may not be deteriorated.

As shown in FIG. 2, in the process step of forming the carcass ply 6A, the endmost side edge 11et, in the circumferential direction, of the ply piece 11 and the side edge 11et of the ply piece 11 that is adjacent thereto in the tire circumferential direction are disposed so as to contact with each other face-to-face on the tread portion 2 side. Therefore, since the overlap portion 14 is not formed in the carcass ply 6A of the tread portion 2, rigidity is likely to vary in the tire circumferential direction in the carcass ply 6A on the tread portion 2 side. However, as shown in FIG. 1, the belt plies 7A, 7B and a tread rubber 2G are disposed outward of the carcass ply 6A on the tread portion 2 side in the tire radial direction. Further, rigidity of the belt plies 7A, 7B is higher than rigidity of the carcass ply 6A. Furthermore, the thickness of the tread rubber 2G is greater than the thickness of a sidewall rubber 3G. Therefore, even when the rigidity of the carcass ply 6A on the tread portion 2 side varies in the tire circumferential direction, dent may not be generated in the outer surface 1S of the tread portion 2.

As shown in FIG. 4, a ratio Ec/Ee of the intermediate elongation rate Ec of the central carcass cords 12c to the intermediate elongation rate Ee of the side edge carcass cords 12e may be determined as appropriate. When the ratio Ec/Ee is great, partial enhancement of rigidity in the overlap portion 14 (shown in FIG. 2) of the carcass ply 6A may not be sufficiently prevented. Meanwhile, when the ratio Ec/Ee is small, rigidity of the overlap portion 14 is reduced, and bulge (dilation) is likely to be generated in a portion in which the rigidity is reduced. In this viewpoint, the ratio Ec/Ee is preferably greater than or equal to 0.10 and more preferably greater than or equal to 0.20, and preferably not greater than 0.40 and more preferably not greater than 0.35.

In the present embodiment, the intermediate elongation rate Ee of the side edge carcass cords 12e disposed in both the side edge portions 11e, 11e, in the circumferential direction, of the ply piece 11 is set to be greater than the intermediate elongation rate Ec of the central carcass cords 12c. However, the present invention is not limited thereto. For example, the intermediate elongation rate Ee of the side edge carcass cords 12e disposed in at least one of both the side edge portions 11e, 11e, in the circumferential direction, of the ply piece 11 may be set to be greater than the intermediate elongation rate Ec of the central carcass cords 12c. Also in such a ply piece 11, rigidity of the carcass ply 6A in the overlap portion 14 (shown in FIG. 2), of the carcass ply 6A, having a partially increased cord density can be prevented from being partially enhanced. Therefore, generation of dent in the outer surface 1S of the tire 1 shown in FIG. 1 can be prevented.

In the present embodiment, the intermediate elongation rate Ee is set to be the same among the side edge carcass cords 12e, and the intermediate elongation rate Ec is set to be the same among the central carcass cords 12c. However, the present invention is not limited thereto. When the average of the intermediate elongation rates Ee of the side edge carcass cords 12e (in the present embodiment, three carcass cords 12 disposed closest to the side edge 11et of the ply piece 11) is set to be greater than the average of the intermediate elongation rates Ec of the central carcass cords 12c (in the present embodiment, the carcass cords 12 other than the three carcass cords 12 disposed closest to the side edge 11et), the intermediate elongation rate Ee may be different among the side edge carcass cords 12e. Similarly, the intermediate elongation rate Ec may be different among the central carcass cords 12c. Also in such a case, rigidity of the overlap portion 14 can be prevented from being partially enhanced.

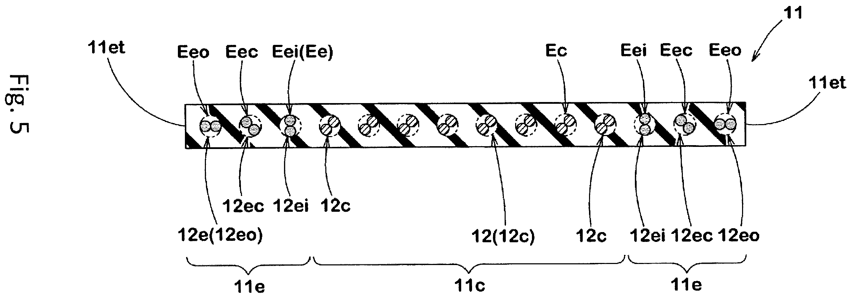

As shown in FIG. 2, each overlap portion 14 of the present embodiment is formed so as to have a substantially triangle shape in the side view. Therefore, as shown in FIG. 3, among the side edge carcass cords 12e, the side edge carcass cords 12e disposed on the side edge 11et side are more likely to be disposed in the overlap portion 14 (shown in FIG. 2) than the side edge carcass cords 12e disposed on the center portion 11c side. Therefore, it is advantageous that the intermediate elongation rate Ee of the side edge carcass cord 12e is increased continuously or stepwise from the center portion 11c toward the side edges 11et in the ply piece 11, whereby variation in rigidity of the carcass ply 6A is effectively reduced. FIG. 5 is a cross-sectional view of a ply piece 11 according to another embodiment of the present invention.

In the present embodiment, the intermediate elongation rate Ee is different among the side edge carcass cords 12e in the side edge portion 11e. In the present embodiment, the side edge carcass cords 12e are classified as: a first side edge carcass cord 12eo disposed closest to the side edge 11et; a second side edge carcass cord 12ec disposed closer to the center portion 11c than the first side edge carcass cord 12eo is; and a third side edge carcass cord 12ei disposed closer to the center portion 11c than the second side edge carcass cord 12ec is.

An intermediate elongation rate Eeo of the first side edge carcass cord 12eo, an intermediate elongation rate Eec of the second side edge carcass cord 12ec, an intermediate elongation rate Eei of the third side edge carcass cord 12ei, and the intermediate elongation rate Ec of the central carcass cords 12c satisfy the following relationship (1). That is, the intermediate elongation rate Ee of the side edge carcass cord 12e is increased continuously from the center portion 11c toward the side edges 11et in the ply piece 11.

$$Ec < Eei < Eec < Eeo \cdots (1)$$

In the present embodiment, a cord material of the first side edge carcass cord 12eo, a cord material of the second side edge carcass cord 12ec, a cord material of the third side edge carcass cord 12ei, and a cord material of the central carcass cords 12c are made different from one another, whereby the above-described relationship (1) is satisfied. For the third side edge carcass cord 12ei, a cord material having an intermediate elongation rate which is relatively greater than that of the central carcass cords 12c, is used. For the second side edge carcass cord 12ec, a cord material having an intermediate elongation rate which is relatively greater than that of the third side edge carcass cord 12ei, is used. For the first side edge carcass cord 12eo, a cord material having an intermediate elongation rate which is relatively greater than that of the second side edge carcass cord 12ec, is used.

For example, when aramid cords are used for the central carcass cords 12c, a rayon cord having an intermediate elongation rate greater than the aramid cords is used for the third side edge carcass cord 12ei. For the second side edge carcass cord 12ec, a PET (polyethylene terephthalate) cord having an intermediate elongation rate greater than the third side edge carcass cord 12ei, is used. For the first side edge carcass cord 12eo, a cord made of nylon 66 having an intermediate elongation rate greater than the second side edge carcass cord 12ec, is used.

In the above-described ply piece 11, the intermediate elongation rate Ee of the side edge carcass cord 12e can be increased continuously from the center portion 11c toward the side edges 11et in the ply piece 11. Thus, the intermediate elongation rate Ee of the side edge carcass cords 12e (that is, on the side edge 11et sides) which are more likely to be disposed in the overlap portion 14 (shown in FIG. 2) of the carcass ply 6A, can be made relatively greater than the intermediate elongation rate Ee of the side edge carcass cords 12e (that is, on the center portion 11c side) which are less likely to be disposed in the overlap portion 14 (shown in FIG. 2). Therefore, in the present embodiment, variation in rigidity of the carcass ply 6A between a portion in which the overlap portion 14 (shown in FIG. 2) is formed and a portion in which the overlap portion 14 is not formed, can be effectively reduced in the side edge portion 11e. Thus, when the tire 1 (shown in FIG. 1) is inflated to an internal pressure, the carcass ply 6A can be more uniformly dilated.

In order to effectively exhibit the above-described effect, a ratio (that is, a ratio Eec/Eeo of the intermediate elongation rate Eec of the second side edge carcass cord 12ec to the intermediate elongation rate Eeo of the first side edge carcass cord 12eo, and a ratio Eei/Eec of the intermediate elongation rate Eei of the third side edge carcass cord 12ei to the intermediate elongation rate Eec of the second side edge carcass cord 12ec) between the intermediate elongation rates Ee of the side edge carcass cords 12e that are adjacent to each other in the tire circumferential direction in the side edge portion 11e of the ply piece 11, is preferably set to be 0.20 to 0.40. Thus, the intermediate elongation rate Ee of the side edge carcass cord 12e can be smoothly increased gradually from the center portion 11c toward the side edges 11et in the ply piece 11. Therefore, variation in rigidity of the carcass ply 6A can be effectively prevented.

Also in the present embodiment, a ratio Ec/Ee of an average of the intermediate elongation rates Ec of the central carcass cords 12c to an average of the intermediate elongation rates Ee of the side edge carcass cords 12e (the first side edge carcass cord 12eo, the second side edge carcass cord 12ec, and the third side edge carcass cord 12ei), is preferably set to be within the above-described range (0.20 to 0.40). Thus, generation of dent in the outer surface 1S of the tire 1 can be effectively prevented.

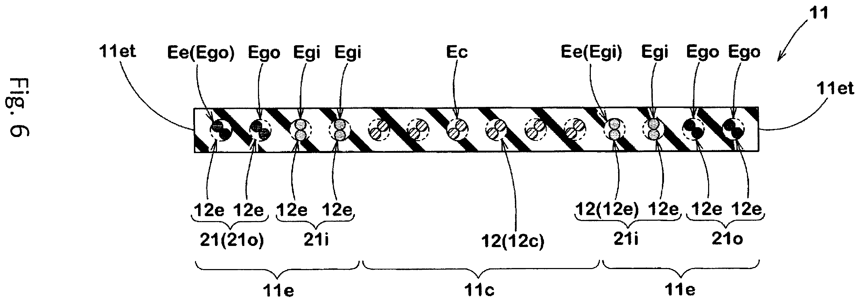

FIG. 6 is a cross-sectional view of a ply piece 11 according to still another embodiment of the present invention. In the present embodiment, in the ply piece 11, for example, the side edge carcass cords 12e are formed by four carcass cords 12 disposed closest to the side edge 11et of the ply piece 11. For example, in the side edge carcass cords 12e, side edge carcass cord groups 21 each having a set of two side edge carcass cords 12e, 12e that are disposed adjacent to each other, in the tire circumferential direction, in the ply piece 11 and that have the same intermediate elongation rate Ee, are defined. In the present embodiment, the side edge carcass cord groups 21 include: an outer side edge carcass cord group 21o disposed closest to the side edge 11et; and an inner side edge carcass cord group 21i that is disposed closer to the center portion 11c than the outer side edge carcass cord group 21o is.

An intermediate elongation rate Ego of each side edge carcass cord 12e of the outer side edge carcass cord group 21o, an intermediate elongation rate Egi of each side edge carcass cord 12e of the inner side edge carcass cord group 21i, and the intermediate elongation rate Ec of each central carcass cord 12c satisfy the following relationship (2). That is, the intermediate elongation rate Ee of the side edge carcass cord 12e is increased stepwise from the center portion 11c toward the side edges 11et in the ply piece 11.

$$Ec < Egi < Ego \cdots (2)$$

In the present embodiment, a cord material of each side edge carcass cord 12e of the outer side edge carcass cord group 21o, a cord material of each side edge carcass cord 12e of the inner side edge carcass cord group 21i, and a cord material of the central carcass cords 12c are made different from one another, whereby the above-described relationship (2) is satisfied. For each side edge carcass cord 12e of the inner side edge carcass cord group 21i, a cord material having an intermediate elongation rate which is relatively greater than that of the central carcass cords 12c is used. For each side edge carcass cord 12e of the outer side edge carcass cord group 21o, a cord material having an intermediate elongation rate which is relatively greater than that of each side edge carcass cord 12e of the inner side edge carcass cord group 21i, is used.

For example, when aramid cords are used for the central carcass cords 12c, a rayon cord having an intermediate elongation rate greater than the aramid cords is used for each side edge carcass cord 12e of the inner side edge carcass cord group 21i. For each side edge carcass cord 12e of the outer side edge carcass cord group 21o, a PET (polyethylene terephthalate) cord having an intermediate elongation rate greater than each side edge carcass cord 12e of the inner side edge carcass cord group 21i, is used.

In the above-described ply piece 11, the intermediate elongation rate Ee of the side edge carcass cord 12e can be increased stepwise from the center portion 11c toward the side edges 11et in the ply piece 11. Thus, the intermediate elongation rate Ego of each side edge carcass cord 12e of the outer side edge carcass cord group 21o which are more likely to be disposed in the overlap portion 14 (shown in FIG. 2) of the carcass ply 6A, can be made relatively greater than the intermediate elongation rate Egi of each side edge carcass cord 12e of the inner side edge carcass cord group 21i which are less likely to be disposed in the overlap portion 14 (shown in FIG. 2). Therefore, in the present embodiment, variation in rigidity of the carcass ply 6A between a portion in which the overlap portion 14 (shown in FIG. 2) is formed and a portion in which the overlap portion 14 is not formed can be effectively reduced in the side edge portion 11e. Thus, when the tire 1 (shown in FIG. 1) is inflated to an internal pressure, the carcass ply 6A can be more uniformly dilated.

In order to effectively exhibit the above-described effect, a ratio Egi/Ego of the intermediate elongation rate Egi of each side edge carcass cord 12e of the inner side edge carcass cord group 21i relative to the intermediate elongation rate Ego of each side edge carcass cord 12e of the outer side edge carcass cord group 21o is preferably set to be 0.20 to 0.40. Also in the present embodiment, a ratio Ec/Ee of an average of the intermediate elongation rates Ec of the central carcass cords 12c relative to an average of the intermediate elongation rates Ee (the intermediate elongation rate Ego of each side edge carcass cord 12e of the outer side edge carcass cord group 21o and the intermediate elongation rate Egi of each side edge carcass cord 12e of the inner side edge carcass cord group 21i) of the side edge carcass cords 12e is preferably set to be within the above-described range (0.20 to 0.35).

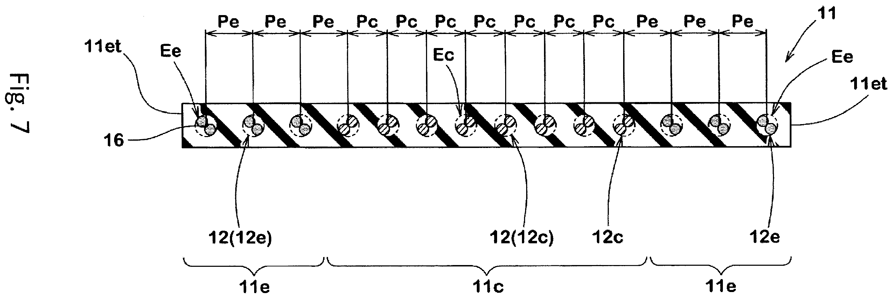

In the above-described embodiments, the ply piece 11 has the carcass cords 12 equally spaced (the spacing P between the carcass cords 12 is uniform) in the tire circumferential direction. However, the present invention is not limited thereto. When the intermediate elongation rate Ee of the side edge carcass cords 12e is set to be greater than the intermediate elongation rate Ec of the central carcass cords 12c, the spacing P may be different. FIG. 7 is a cross-sectional view of a ply piece 11 according to still another embodiment of the present invention.

In the present embodiment, in the ply piece 11, a spacing Pe between the side edge carcass cords 12e disposed in at least one of both the side edge portions 11e, 11e, in the description herein, disposed in both of the side edge portions 11e, 11e, is set to be greater than a spacing Pc between the central carcass cords 12c. In the present embodiment, the same spacing Pe is set for each of the side edge carcass cords 12e. Further, the same spacing Pc is set for each of the central carcass cords 12c.

In the above-described ply piece 11, the cord density of each of the side edge portions 11e, 11e can be relatively reduced. Therefore, increase of the cord density in the overlap portion 14 (shown in FIG. 2) of the carcass ply 6A can be prevented. Furthermore, in the side edge portions 11e, 11e, the side edge carcass cords 12e that are relatively easily elongated (the intermediate elongation rate Ee is great) are disposed. Thus, in the carcass ply 6A, variation in rigidity of the carcass ply 6A (shown in FIG. 2) between a portion in which the overlap portion 14 is formed and a portion in which the overlap portion 14 is not formed, can be effectively reduced. Therefore, generation of dent in the outer surface 1S of the tire 1 shown in FIG. 1 can be prevented. Further, the spacing Pc for each of the central carcass cords 12c of the center portion 11c in which the overlap portion 14 is not formed is set to be less than the spacing Pe for each of the side edge carcass cords 12e. Therefore, various performances, of the tire 1, including steering stability performance may not be deteriorated.

As described above, in the tread portion 2 in which the endmost side edge 11et, in the circumferential direction, of the ply piece 11 and the side edge 11et of the ply piece 11 adjacent thereto in the tire circumferential direction are disposed so as to contact with each other face-to-face, the overlap portion 14 is not formed. Therefore, in the tread portion 2, the spacing P varies among the carcass cords 12 in the tire circumferential direction. However, the tread portion 2 has the belt plies 7A, 7B and the tread rubber 2G disposed outward of the carcass ply 6A in the tire radial direction. Therefore, poor appearance of the tire 1 such as dent or bulge may not be generated.

In order to effectively exhibit the above-described effect, a ratio Pc/Pe of the spacing Pc for the central carcass cords 12c to the spacing Pe for the side edge carcass cords 12e is preferably set to be 0.50 to 0.83. When the ratio Pc/Pe is greater than 0.83, increase of the cord density of the overlap portion 14 may not be sufficiently prevented.

Meanwhile, when the ratio Pc/Pe is less than 0.50, the cord density of the overlap portion 14 is reduced, and bulge (dilation) is likely to be generated in the portion in which the cord density of the overlap portion 14 is reduced. In this viewpoint, the ratio Pe/Pc is more preferably greater than or equal to 0.60 and more preferably not greater than 0.75.

In the present embodiment, the spacing Pe is set to be the same for each of the side edge carcass cords 12e, and the spacing Pc is set to be the same for each of the central carcass cords 12c. However, the present invention is not limited thereto. For example, when the average of the spacings Pe for the side edge carcass cords 12e (in the present embodiment, three carcass cords 12 disposed closest to the side edge 11et of the ply piece 11) is set to be greater than the average of the spacings Pc for the central carcass cords 12c (in the present embodiment, carcass cords other than the three carcass cords 12 disposed closest to the side edge 11et), the spacing Pe may be different among the side edge carcass cords 12e. Further, the spacing Pc may be different among the central carcass cords 12c. Also in such a case, rigidity of the overlap portions 14 of the carcass ply 6A can be prevented from being partially enhanced.

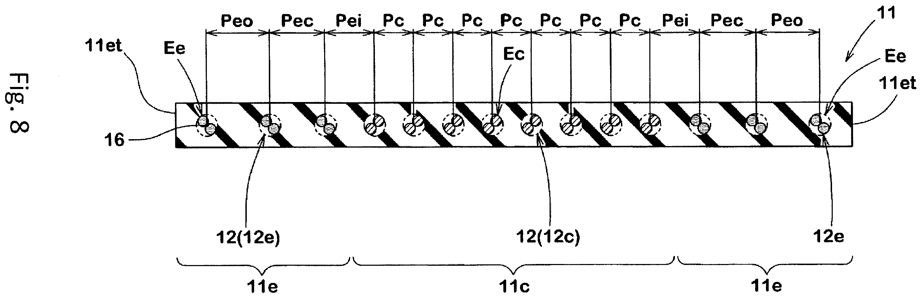

As described above, among the side edge carcass cords 12e, the side edge carcass cords 12e disposed on the side edge 11et sides are more likely to be disposed in the overlap portion 14 (shown in FIG. 2) of the carcass ply 6A as compared to the side edge carcass cords 12e disposed on the center portion 11c side. Therefore, the spacing Pe for the side edge carcass cord 12e is advantageously increased continuously or stepwise (in the present embodiment, continuously) from the center portion 11c toward the side edges 11et in the ply piece 11. FIG. 8 is a cross-sectional view of a ply piece 11 according to still another embodiment of the present invention.

In the present embodiment, the spacings Pe for the side edge carcass cord 12e are classified as a first spacing Peo, a second spacing Pec, and a third spacing Pei in order, respectively, from the side edge 11et. The first spacing Peo, the second spacing Pec, the third spacing Pei, and the spacing Pc satisfy the following relationship (3). That is, the spacing Pe for the side edge carcass cord 12e is increased continuously from the center portion 11c toward the side edges 11et in the ply piece 11.

$$Pc<Pei<Pec<Peo \cdots (3)$$

In the above-described ply piece 11, the spacings Pe for the side edge carcass cords 12e (that is, on the side edge 11et sides) which are more likely to be disposed in the overlap portion 14 (shown in FIG. 2) of the carcass ply 6A can be made relatively greater than the spacings Pe for the side edge carcass cords 12e (that is, on the center portion 11c side) which are less likely to be disposed in the overlap portion 14 (shown in FIG. 2). Therefore, in the present embodiment, in the side edge portion 11e, variation in rigidity of the carcass ply 6A between a portion in which the overlap portion 14 (shown in FIG. 2) is formed, and a portion in which the overlap portion 14 is not formed, can be more effectively reduced. Thus, when the tire 1 (shown in FIG. 1) is inflated to an internal pressure, the carcass ply 6A can be more uniformly dilated. A ratio Pc/Pe of an average of the spacings Pc for the central carcass cords 12c to an average of the spacings Pe for the side edge carcass cords 12e is preferably set to be 0.50 to 0.83.

In order to effectively exhibit the above-described effect, in the side edge portion 11e of the carcass ply 6A, a ratio (that is, a ratio Pec/Peo of the second spacing Pec to the first spacing Peo for the side edge carcass cords 12e, and a ratio Pei/Pec of the third spacing Pei to the second spacing Pec for the side edge carcass cords 12e) between the spacings Pe for the side edge carcass cords 12e adjacent to each other in the tire circumferential direction, is preferably set to be 0.85 to 0.98. Thus, the spacing Pe for the side edge carcass cord 12e can be smoothly increased gradually from the center portion 11c toward the side edges 11et in the ply piece 11, whereby variation in rigidity of the carcass ply 6A can be effectively prevented.

The spacings Pe for the side edge carcass cords 12e satisfy the above-described relationship (3), and further the intermediate elongation rate Eeo of the first side edge carcass cord 12eo, the intermediate elongation rate Eec of the second side edge carcass cord 12ec, and the intermediate elongation rate Eei of the third side edge carcass cord 12ei, which are shown in FIG. 5, may satisfy the above-described relationship (1) (shown in FIG. 5). Thus, both the spacing Pe and the intermediate elongation rate Ee for the side edge carcass cord 12e can be smoothly increased gradually from the center portion 11c toward the side edges 11et in the ply piece 11. Therefore, variation in cord density of the carcass cords 12 can be more effectively prevented.

In the present embodiment, the spacing Pe for the side edge carcass cord 12e is increased continuously from the center portion 11c toward the side edges 11et in the ply piece 11. However, the present invention is not limited thereto. For example, the spacing Pe for the side edge carcass cord 12e may be increased stepwise from the center portion 11c toward the side edges 11et in the ply piece 11. In this case, the spacing Pe (not shown) for each side edge carcass cord 12e of the outer side edge carcass cord group 21o is advantageously set to be greater than the spacing Pe (not shown) for each side edge carcass cord 12e of the inner side edge carcass cord group 21i, in the same manner as in FIG. 6.

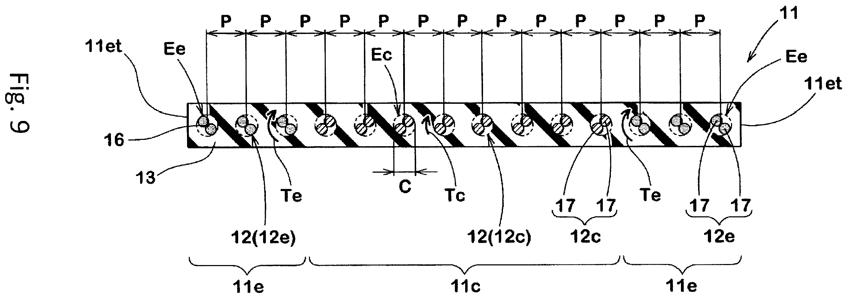

In the above-described embodiments, the number of twists of the side edge carcass cord 12e and the number of twists of the central carcass cord 12c are set to be the same. However, the present invention is not limited thereto. FIG. 9 is a cross-sectional view of a ply piece 11 according to still another embodiment of the present invention. As shown in FIG. 9, the number Te of twists of the side edge carcass cord 12e may be set to be greater than the number Tc of twists of the central carcass cord 12c. In the description herein, the number Te of twists of the carcass cord 12 and the number Tc of twists of the carcass cord 12 are each defined as the number of the second twists of the strands 17, 17.

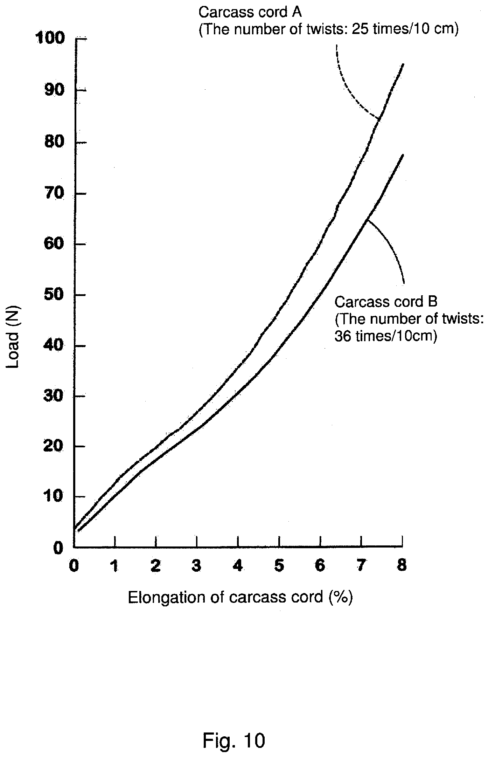

FIG. 10 is a graph showing a relationship between load and elongation of the carcass cords 12. FIG. 10 shows a relationship between elongation and load for a carcass cord A in which the number of twists is 25 times/10 cm, and for a carcass cord B in which the number of twists is 36 times/10 cm. These carcass cords A, B are cords made of PET (polyethylene terephthalate) having a fineness of 1400 dtex/2. As is apparent from the graph, the carcass cord B in which the number of twists is great is easily elongated and thus has a low rigidity as compared to the carcass cord A in which the number of twists is small. Therefore, as shown in FIG. 9, the carcass cords 12 in the side edge portions 11e, 11e in which the number Te of twists is set to be great, are easily elongated and have a low rigidity, as compared to the carcass cords 12 in the center portion 11c in which the number Tc of twists is set to be small.

As described above, for the side edge carcass cords 12e, a cord material having the intermediate elongation rate Ee that is relatively greater than the intermediate elongation rate of the central carcass cords 12c, is used. The number Tc of twists of the side edge carcass cord 12e formed by such a cord material is set to be greater than the number Tc of twists of the central carcass cord 12c. Therefore, the intermediate elongation rate Ee of the side edge carcass cords 12e can be effectively increased. Thus, in the carcass ply 6A shown in FIG. 2, variation in rigidity of the carcass ply 6A (shown in FIG. 2) between a portion in which the overlap portion 14 is formed and a portion in which the overlap portion 14 is not formed, can be effectively reduced. Therefore, generation of poor appearance such as dent or bulge in the outer surface 1S of the tire 1 shown in FIG. 1 can be prevented.

Further, the number Tc of twists of the central carcass cord 12c is set to be less than the number Te of twists of the side edge carcass cord 12e. Thus, rigidity of the carcass ply 6A is maintained, whereby various performances, of the tire 1, including steering stability performance may not be deteriorated. A ratio Tc/Te of the number Tc of twists of the central carcass cord 12c to the number Te of twists of the side edge carcass cord 12e is preferably set to be 0.80 to 0.95.

The number of twists of the first side edge carcass cord 12eo, the number of twists of the second side edge carcass cord 12ec, and the number of twists of the third side edge carcass cord 12ei as shown in FIG. 5 may be set such that the number Te of twists of the side edge carcass cord 12e is increased continuously from the center portion 11c toward the side edges 11et in the ply piece 11. Further, the spacings Peo, Pec, Pei for the side edge carcass cords 12e, and the spacing Pc (shown in FIG. 8) may be set such that the spacing is increased continuously from the center portion 11c toward the side edges 11et in the ply piece 11. Thus, in the carcass ply 6A (shown in FIG. 2), variation in rigidity of the carcass ply 6A (shown in FIG. 2) between a portion in which the overlap portion 14 is formed and a portion in which the overlap portion 14 is not formed, can be more effectively reduced.

Further, the number of twists of each side edge carcass cord 12e of the outer side edge carcass cord group 21o and the number of twists of each side edge carcass cord 12e of the inner side edge carcass cord group 21i as shown in FIG. 6 may be set such that the number Te of twists of the side edge carcass cord 12e is increased stepwise from the center portion 11c toward the side edges 11et in the ply piece 11. Further, the spacing Pe for the side edge carcass cord 12e may be set so as to be increased stepwise from the center portion 11c toward the side edges 11et in the ply piece 11.

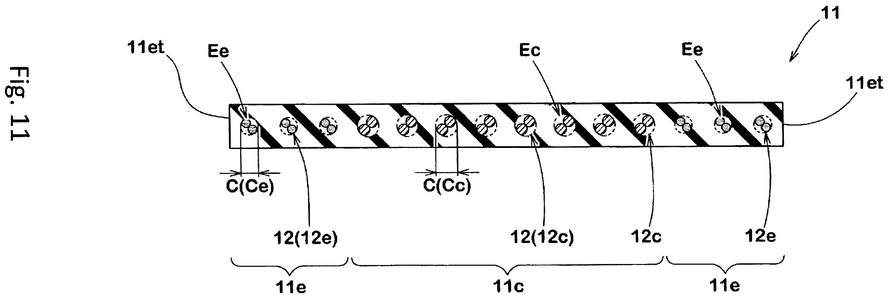

In the above-described embodiments, the side edge carcass cords 12e and the central carcass cords 12c have the same thickness C. However, the present invention is not limited thereto. FIG. 11 is a cross-sectional view of a ply piece 11 according to still another embodiment of the present invention. As shown in FIG. 11, a thickness Ce of the side edge carcass cord 12e may be set to be less than a thickness Cc of the central carcass cord 12c.

As described above, for the side edge carcass cords 12e, a cord material having an intermediate elongation rate relatively greater than the intermediate elongation rate of the central carcass cords 12c, is used. The thickness Ce of the side edge carcass cord 12e formed by such a cord material is set to be less than the thickness Cc of the central carcass cord 12c, whereby the intermediate elongation rate Ee of the side edge carcass cords 12e can be effectively increased. Thus, in the carcass ply 6A (shown in FIG. 2), variation in rigidity of the carcass ply 6A (shown in FIG. 2) between a portion in which the overlap portion 14 is formed and a portion in which the overlap portion 14 is not formed, can be effectively reduced. Therefore, generation of poor appearance such as dent or bulge in the outer surface 1S of the tire 1 shown in FIG. 1 can be prevented.

Further, the thickness Cc of the central carcass cord 12c is set to be greater than the thickness Ce of the side edge carcass cord 12e. Thus, rigidity of the carcass ply 6A is maintained. Therefore, various performances, of the tire 1, including steering stability performance may not be deteriorated. A ratio Cc/Ce of the thickness Cc of the central carcass cord 12c to the thickness Ce of the side edge carcass cord 12e is preferably set to be 1.2 to 2.0.

The thicknesses of the first side edge carcass cord 12eo, the thickness of the second side edge carcass cord 12ec, and the thickness of the third side edge carcass cord 12ei as shown in FIG. 5 may be set such that the thickness Ce of the side edge carcass cord 12e is reduced continuously from the center portion 11c toward the side edges 11et in the ply piece 11. Further, the spacings Peo, Pec, and Pei for the side edge carcass cords 12e shown in FIG. 8, and the spacing Pc (shown in FIG. 8), and the number Te (shown in FIG. 9) of twists of the first side edge carcass cord 12eo, the number Te of twists of the second side edge carcass cord 12ec, and the number Te of twists of the third side edge carcass cord 12ei may be set such that the spacing Pe and the number Te of twists are increased continuously from the center portion 11c toward the side edges 11et in the ply piece 11. Thus, in the carcass ply 6A (shown in FIG. 2), variation in rigidity of the carcass ply 6A (shown in FIG. 2) between a portion in which the overlap portion 14 is formed and a portion in which the overlap portion 14 is not formed, can be more effectively reduced.

The thickness of each side edge carcass cord 12e of the outer side edge carcass cord group 21o and the thickness of each side edge carcass cord 12e of the inner side edge carcass cord group 21i as shown in FIG. 6 may be set such that the thickness Ce of the side edge carcass cord 12e is reduced stepwise from the center portion 11c toward the side edges 11et in the ply piece 11. Further, the spacing Pe and the number Te of twists for the side edge carcass cord 12e may be set to be increased stepwise from the center portion 11c toward the side edges 11et in the ply piece 11.

Although the preferred embodiments of the present invention have been described above in detail, the present invention is not limited to the above embodiments shown in the drawings, and various modifications can be made to practice the present invention.

[Examples]

[Example A]

A tire having the basic structure shown in FIG. 1 and having the ply pieces indicated in Table 1 was produced, and the performance of the tire was tested (Examples 1 to 8). In Examples 1 to 4, the intermediate elongation rate Ee of the carcass cords disposed in both of the side edge portions was set to be greater than the intermediate elongation rate Ec of the carcass cords disposed in the center portion. In Examples 5 to 8, the intermediate elongation rate Ee of the carcass cords disposed in one of the side edge portions was set to be greater than the intermediate elongation rate Ec of the carcass cords disposed in the center portion. In Example 9, the intermediate elongation rate Ee of the carcass cords disposed in both of the side edge portions was increased continuously from the center portion toward the side edges in the ply piece.

For comparison, a tire (Conventional example) having ply pieces in which the intermediate elongation rate was the same among the carcass cords, and a tire (Comparative example 1) having ply pieces in which the intermediate elongation rate Ee of the carcass cords disposed in both of the side edge portions was set to be less than the intermediate elongation rate Ec of the carcass cords disposed in the center portion, were produced and the test was made as in Examples.

Among Examples 1 to 9, Conventional example, and Comparative example 1, the spacing P and the thickness C (the structure of the cord) for the carcass cords are set to be the same. Further, in Example 9, "Ec/Ee" was calculated based on the intermediate elongation rate Ee obtained as an average value of the intermediate elongation rate Eeo of the first side edge carcass cord, the intermediate elongation rate Eec of the second side edge carcass cord, and the intermediate elongation rate Eei of the third side edge carcass cord. The common specifications were as follows.

Tire size: 195/65R15
Rim size: 15×6J
Thickness of sidewall portion: 2.5 mm
Ply piece:

Length L1 in tire circumferential direction: 28 mm
Length L2 in radial direction: 382 mm

Carcass cord:

Structure: 1100 dtex/2
Thickness C: 2200 dtex
Spacing P: 1.3 mm
The number T of twists: 68 times/10cm
Intermediate elongation rate of aramid cord: 1.43%
Intermediate elongation rate of rayon cord: 4.18%
Intermediate elongation rate of PET cord: 6.68%

Maximum number of carcass cords disposed in overlap portion in each ply piece: 5

Conventional example:

Cord material of carcass cord: aramid
The test method was as follows.

<Appearance of tire>

Each test tire was mounted on the rim, and was inflated to an internal pressure of 300 kPa. It was visually checked whether or not poor appearance such as dent was found from the sidewall portions toward the bead portions, to evaluate appearance of the tire. The evaluation was as follows. S, A, B, C, and D represent levels at which there is no problem in the marketplace.

S: Poor appearance was not found at all.
A: A cord overlap portion was found, depending on lighting, in a region for which a gauge for the sidewall rubber outside the carcass cords was less than 3 mm.
B: A cord overlap portion was found, depending on lighting, in a region for which a gauge for the sidewall rubber outside the carcass cords was 3 to 5 mm.
C: A cord overlap portion was found by a tactile test in a region for which a gauge for the sidewall rubber outside the carcass cords was less than 3 mm.
D: A cord overlap portion was found by a tactile test in a region for which a gauge for the sidewall rubber outside the carcass cords was 3 to 5 mm.
E: A cord overlap portion was seen as a dent in a region for which a gauge for the sidewall rubber outside the carcass cords was less than 3 mm.
F: A cord overlap portion was seen as a dent in a region for which a gauge for the sidewall rubber outside the carcass cords was 3 to 5 mm.

The results of the test are indicated in Table 1.

[Table 1]

| | Conventional example | Comparative example 1 | Example 1 | Example 2 | Example 3 | Example 4 | Example 5 | Example 6 | Example 7 | Example 8 | Example 9 |
|---|---|---|---|---|---|---|---|---|---|---|---|
| Cross-sectional view of ply piece | - | - | FIG. 4 | FIG. 4 | FIG. 4 | FIG. 4 | FIG. 4 | FIG. 4 | FIG. 4 | FIG. 4 | FIG. 5 |
| Side edge portion including carcass cord having intermediate elongation rate Ee greater than intermediate elongation rate Ec of carcass cord of center portion | - | - | Provided on both sides | Provided on both sides | Provided on both sides | Provided on both sides | Provided on one side | Provided on one side | Provided on one side | Provided on one side | Provided on both sides |
| The number of carcass cords in side edge portion | - | - | 1 | 1 | 2 | 2 | 1 | 1 | 2 | 2 | 3 |
| Cord material of carcass cord of center portion | - | rayon | aramid | aramid | aramid | aramid | aramid | aramid | aramid | aramid | aramid |
| Cord material of carcass cord of side edge portion | - | aramid | rayon | PET | rayon | PET | rayon | PET | rayon | PET | - |
| Ratio Ec/Ee of intermediate elongation rate Ec of carcass cord of center portion relative to intermediate elongation rate Ee of carcass cord of side edge portion | - | 2.93 | 0.34 | 0.21 | 0.34 | 0.21 | 0.34 | 0.21 | 0.34 | 0.21 | 0.12 |

EP 3 106 321 B1

(continued)

| | Conventional example | Comparative example 1 | Example 1 | Example 2 | Example 3 | Example 4 | Example 5 | Example 6 | Example 7 | Example 8 | Example 9 |
|---|---|---|---|---|---|---|---|---|---|---|---|
| Cord material of third side edge carcass cord | - | - | - | - | - | - | - | - | - | - | Rayon |
| Cord material of second side edge carcass cord | - | - | - | - | - | - | - | - | - | - | PET |
| Cord material of first side edge carcass cord | - | - | - | - | - | - | - | - | - | - | nylon 66 |
| Appearance of tire (score) [S, A, B, and C each represent good score] | E | F | S | A | B | C | A | A | B | C | S |

According to the results of the test, it can be confirmed that generation of poor appearance can be reduced in the tires of examples as compared to the tire of comparative example.

[Example B]

A tire having the basic structure shown in FIG. 1 and having the ply pieces indicated in Table 2 was produced, and the performance of the tire was tested (Example 4, Example 10, and Example 11). The tire of Example 4 is the same as the tire of Example 4 in Example A. In the tires of Example 10 and Example 11, the spacing Pe between the carcass cords in the side edge portion was set to be greater than the spacing Pc between the carcass cords in the center portion. Further, in the tire of Example 11, the spacing Pe between the carcass cords in the side edge portion was increased continuously from the center portion toward the side edges in the ply piece. In Example 11, "Pc/Pe" was calculated based on the spacing Pe obtained as an average value of the first spacing Peo, the second spacing Pec, and the third spacing Pei. The common specifications were the same as those for Example A except for the spacing P between the carcass cords. The test method was also the same as that for Example A. The results of the test are indicated in Table 2.

[Table 2]

| | Example 4 | Example 10 | Example 11 |
|---|---|---|---|
| Cross-sectional view of ply piece | FIG. 4 | FIG. 7 | FIG. 8 |
| Side edge portion including carcass cord having intermediate elongation rate Ee greater than intermediate elongation rate Ec of carcass cord of center portion | Provided on both sides | Provided on both sides | Provided on both sides |
| The number of carcass cords in side edge portion | 2 | 2 | 3 |
| Cord material of carcass cord of center portion | aramid | aramid | aramid |
| Cord material of carcass cord of side edge portion | PET | PET | PET |
| Ratio Ec/Ee of intermediate elongation rate Ec of carcass cord of center portion relative to intermediate elongation rate Ee of carcass cord of side edge portion | 0.21 | 0.21 | 0.21 |
| Ratio Pc/Pe of spacing Pc between carcass cords of center portion relative to spacing Pe between carcass cords of side edge portion | 1.0 | 0.6 | 0.6 |
| Third spacing Pei (mm) between carcass cords of side edge portion | - | - | 1.0 |
| Second spacing Pec (mm) between carcass cords of side edge portion | - | - | 1.4 |
| First spacing Peo (mm) between carcass cords of side edge portion | - | - | 1.8 |
| Appearance of tire (score) [S, A, B, C, and D each represent good score] | C | B | A |

According to the results of the test, it can be confirmed that generation of poor appearance can be more effectively reduced in the tire (Example 10, Example 11) having the ply pieces in which the spacing Pe between the carcass cords of the side edge portion is greater than the spacing Pc between the carcass cords of the center portion, as compared to the tire (Example 4) having the ply pieces in which all the spacings P between the carcass cords are the same (i. e. Pc/Pe=1.0).

[Example C]

A tire having the basic structure shown in FIG. 1 and having the ply pieces indicated in Table 3 was produced, and the performance of the tire was tested (Example 4, Example 12, and Example 13). The tire of Example 4 is the same as the tire of Example 4 in Example A. In the tires of Example 12 and Example 13, the number Te of twists of the carcass cord of the side edge portion was set to be greater than the number Tc of twists of the carcass cord of the center portion. Further, in the tire of Example 13, the number Te of twists of the carcass cord of the side edge portion was increased continuously from the center portion toward the side edges in the ply piece. In Example 13, "Tc/Te" was calculated based on the number Te of twists obtained as an average value of the number Teo of twists of the first side edge carcass cord, the number Tec of twists of the second side edge carcass cord, and the number Tei of twists of the third side edge carcass cord. The common specifications were the same as those for Example A except for the number T of twists of the carcass cord. The test method was the same as that for Example A. The results of the test are indicated in Table 3.

[Table 3]

| | Example 4 | Example 12 | Example 13 |
|---|---|---|---|
| Cross-sectional view of ply piece | FIG. 4 | FIG. 9 | - |
| Side edge portion including carcass cord having intermediate elongation rate Ee greater than intermediate elongation rate Ec of carcass cord of center portion | Provided on both sides | Provided on both sides | Provided on both sides |
| The number of carcass cords in side edge portion | 2 | 2 | 3 |
| Cord material of carcass cord of center portion | aramid | aramid | aramid |
| Cord material of carcass cord of side edge portion | PET | PET | PET |
| Ratio Ec/Ee of intermediate elongation rate Ec of carcass cord of center portion relative to intermediate elongation rate Ee of carcass cord of side edge portion | 0.21 | 0.21 | 0.21 |
| Ratio Tc/Te of the number Tc of twists of carcass cord of center portion relative to the number Te of twists of carcass cord of side edge portion | 1.0 | 0.9 | 0.9 |
| The number Tei of twists of third side edge carcass cord (times/10 cm) | - | - | 56 |
| The number Tec of twists of second side edge carcass cord (times/10 cm) | - | - | 60 |
| The number Teo of twists of first side edge carcass cord (times/10 cm) | - | - | 68 |
| Appearance of tire (score) [S, A, B, C, and D each represent good score] | C | B | A |

According to the results of the test, it can be confirmed that generation of poor appearance can be more effectively reduced in the tire (Example 12 and Example 13) having the ply pieces in which the number Te of twists of the carcass cord of the side edge portion is greater than the number Tc of twists of the carcass cord of the center portion, as compared to the tire (Example 4) having the ply pieces in which the number T of twists are the same among all the carcass cords (i.e. Tc/Te=1.0).

[Example D]

A tire having the basic structure shown in FIG. 1 and having the ply pieces indicated in Table 4 was produced, and the performance of the tire was tested (Example 4, Example 14, and Example 15). The tire of Example 4 is the same as the tire of Example 4 in Example A. In the tires of Example 14 and Example 15, the thickness Ce of the carcass cord of the side edge portion was set to be less than the thickness Cc of the carcass cord of the center portion. Further, in the tire of Example 15, the thickness Ce of the carcass cord of the side edge portion was reduced continuously from the center portion toward the side edges in the ply piece. In Example 15, "Cc/Ce" was calculated based on the thickness Ce obtained as an average value of the thickness Ceo of the first side edge carcass cord, the thickness Cec of the second side edge carcass cord, and the thickness Cei of the third side edge carcass cord. The common specifications were the same as those for Example A except for the thickness C of the carcass cord. The test method was the same as that for Example A. The results of the test are indicated in Table 4.

[Table 4]

| | Example 4 | Example 14 | Example 15 |
|---|---|---|---|
| Cross-sectional view of ply piece | FIG. 4 | FIG. 11 | - |

(continued)

|  | Example 4 | Example 14 | Example 15 |
|---|---|---|---|
| Side edge portion including carcass cord having intermediate elongation rate Ee greater than intermediate elongation rate Ec of carcass cord of center portion | Provided on both sides | Provided on both sides | Provided on both sides |
| The number of carcass cords in side edge portion | 2 | 2 | 3 |
| Cord material of carcass cord of center portion | aramid | aramid | aramid |
| Cord material of carcass cord of side edge portion | PET | PET | PET |
| Ratio Ec/Ee of intermediate elongation rate Ec of carcass cord of center portion relative to intermediate elongation rate Ee of carcass cord of side edge portion | 0.21 | 0.21 | 0.21 |
| Ratio Cc/Ce of thickness Cc of carcass cord of center portion relative to thickness Ce of carcass cord of side edge portion | 1.0 | 1.5 | 1.5 |
| Thickness Cei (total fineness: dtex) of third side edge carcass cord | - | - | 1670 |
| Thickness Cec (total fineness: dtex) of second side edge carcass cord | - | - | 1100 |
| Thickness Ceo (total fineness: dtex) of first side edge carcass cord | - | - | 800 |
| Appearance of tire (score) [S, A, B, C, and D each represent good score] | C | B | A |

According to the results of the test, it can be confirmed that generation of poor appearance can be more effectively reduced in the tire (Example 14 and Example 15) having the ply pieces in which the thickness Ce of the carcass cord of the side edge portion is less than the thickness Cc of the carcass cord of the center portion, as compared to the tire (Example 4) having the ply pieces in which the thicknesss C is the same among all the carcass cords (i.e. Cc/Ce=1.0).

**Claims**

1.  A pneumatic tire 1 comprising a carcass (6) having at least one carcass ply (6A) that extends from a tread portion (2) through sidewall portions (3) to bead portions (4), wherein
    the carcass ply (6A) has strip-shaped sheet-like ply pieces (11) arranged in a tire circumferential direction, and each strip-shaped sheet-like ply piece (11) has a radial length (L2) greater than a circumferential length (L1) in the tire circumferential direction,
    each ply piece (11) has a plurality of carcass cords (12) arranged along a longitudinal direction,
    the ply piece (11) at least partially overlaps a ply piece (11) that is adjacent thereto in the tire circumferential direction, and
    an intermediate elongation rate (Ee) of the carcass cords (12) arranged in at least one of side edge portions (11e), in a circumferential direction, of the ply piece (11) is greater than an intermediate elongation rate (Ec) of the carcass cords (12) arranged in a center portion (11c) of the ply piece (11),
    **characterized in that**
    the intermediate elongation rate (Ee) of the carcass cords (12) arranged in the side edge portions (11e) is increased continuously from the center portion (11c) toward side edges (11et) in the ply piece (11).

2.  The pneumatic tire 1 according to claim 1, wherein the intermediate elongation rate (Ee) of the carcass cords (12) arranged in both the side edge portions (11e), in the circumferential direction, of the ply piece (11) is greater than the intermediate elongation rate (Ec) of the carcass cords (12) arranged in the center portion (11c).

3.  The pneumatic tire 1 according to claim 1 or 2, wherein a ratio Ec/Ee in intermediate elongation rate of the carcass cords (12) is 0.20 to 0.35.

4.  The pneumatic tire 1 according to any one of claims 1 to 3, wherein a cord material of the carcass cords (12) arranged in the side edge portions (11e) and a cord material of the carcass cords (12) arranged in the center portion (11c) are different from each other.

**Patentansprüche**

1.  Luftreifen (1), umfassend eine Karkasse (6) mit mindestens einer Karkasslage (6A), die sich von einem Laufflächenabschnitt (2) durch Seitenwandabschnitte (3) zu Wulstabschnitten (4) erstreckt, wobei

    die Karkasslage (6A) streifenförmige, bahnartige Lagenstücke (11) aufweist, die in einer Reifenumfangsrichtung angeordnet sind, und jedes streifenförmige bahnartige Lagenstück (11) eine radiale Länge (L2) aufweist, die größer ist als eine Umfangslänge (L1) in der Reifenumfangsrichtung,
    jedes Lagenstück (11) eine Vielzahl von Karkasskorden (12) aufweist, die entlang einer Längsrichtung angeordnet sind,
    das Lagenstück (11) ein dazu benachbartes Lagenstück (11) in der Reifenumfangsrichtung zumindest teilweise überlappt, und
    eine mittlere Dehnungsrate (Ee) der in mindestens einem der Seitenrandabschnitte (11e) des Lagenstücks (11) in der Umfangsrichtung angeordneten Karkasskorde (12) größer ist als eine mittlere Dehnungsrate (Ec) der in einem Mittelabschnitt (11c) des Lagenstücks (11) angeordneten Karkasskorde (12),
    **dadurch gekennzeichnet, dass**
    die mittlere Dehnungsrate (Ee) der in den Seitenrandabschnitten (11e) angeordneten Karkasskorde (12) kontinuierlich von dem Mittelabschnitt (11c) zu den Seitenrändern (11et) in dem Lagenstück (11) erhöht ist.

2.  Luftreifen (1) nach Anspruch 1, wobei die mittlere Dehnungsrate (Ee) der in den beiden Seitenrandabschnitten (11e) in der Umfangsrichtung des Lagenstücks (11) angeordneten Karkasskorde (12) größer ist als die mittlere Dehnungsrate (Ec) der in dem Mittelabschnitt (11c) angeordneten Karkasskorde (12).

3.  Luftreifen (1) nach Anspruch 1 oder 2, wobei ein Verhältnis Ec/Ee in der mittleren Dehnungsrate der Karkasskorde (12) 0,20 bis 0,35 beträgt.

4.  Luftreifen (1) nach einem der Ansprüche 1 bis 3, wobei sich ein Kordmaterial der in den Seitenrandabschnitten (11e) angeordneten Karkasskorde (12) und ein Kordmaterial der in dem Mittelabschnitt (11c) angeordneten Karkasskorde (12) voneinander unterscheiden.

**Revendications**

1.  Bandage pneumatique (1) comprenant une carcasse (6) ayant au moins une nappe de carcasse (6A) qui s'étend depuis une portion formant bande de roulement (2) en traversant des portions formant parois latérales (3) jusqu'à des portions de talons (4), dans lequel
    la nappe de carcasse (6A) comprend des morceaux de nappe semblables à des feuilles en forme de bande (1) agencés dans une direction circonférentielle du pneumatique, et chaque morceau de nappe semblable une feuille en forme de bande (11) a une longueur radiale (L2) plus grande qu'une longueur circonférentielle (L1) dans la direction circonférentielle du pneumatique,
    chaque morceau de nappe (11) comporte une pluralité de câblés de carcasse (12) agencés le long d'une direction longitudinale,
    le morceau de nappe (11) chevauche au moins partiellement un morceau de nappe (11) qui lui est adjacent dans la direction circonférentielle du pneumatique, et
    un taux d'allongement intermédiaire (Ee) des câblés de carcasse (12) agencés dans l'une au moins des portions de bordure latérale (11e), dans une direction circonférentielle, du morceau de nappe (11) est plus grand qu'un taux d'allongement intermédiaire (Ec) des câblés de carcasse (12) agencés dans une portion centrale (11c) du morceau de nappe (11),
    **caractérisé en ce que**
    le taux d'allongement intermédiaire (Ee) des câblés de carcasse (12) agencés dans les portions de bordure latérale (11e) augmente en continu depuis la portion centrale (11c) en direction des bordures latérales (11et) dans le morceau de nappe (11).

2.  Bandage pneumatique (1) selon la revendication 1, dans lequel le taux d'allongement intermédiaire (Ee) des câblés de carcasse (12) agencés dans les deux portions de bordure latérale (11e), dans la direction circonférentielle, du morceau de nappe (11) et plus grand que le taux d'allongement intermédiaire (Ec) des câblés de carcasse (12) agencés dans la portion centrale (11c).

3. Bandage pneumatique (1) selon la revendication 1 ou 2, dans lequel un rapport Ec/Ee du taux d'allongement intermédiaire des câblés de carcasse (12) est de 0,20 à 0,35.

4. Bandage pneumatique (1) selon l'une quelconque des revendications 1 à 3, dans lequel un matériau des câblés de carcasse (12) agencés dans les portions de bordure latérale (11e) et un matériau des câblés de carcasse (12) agencés dans la portion centrale (11c) sont différents l'un de l'autre.

Fig. 1

Fig. 2

Fig. 3

Fig. 4

Fig. 5

Fig. 6

Fig. 7

26

Fig. 8

Fig. 9

Fig. 10

Fig. 11

**EP 3 106 321 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012106441 A
- JP 2010208090 A
- JP 2014069335 A